# EUROPEAN PATENT APPLICATION

(11) **EP 3 179 731 A1**
(43) Date of publication of application: **14.06.2017**
(21) Application number: 16199157.5
(22) Date of filing: 16.11.2016
(51) Int. Cl.: H04N 21/258, G06F 3/14, G06F 3/048, G06F 3/0481, G06F 3/0482, H04N 21/422, H04N 21/431, H04N 21/436

(54) **METHOD AND DEVICE FOR ARRANGING APPLICATIONS**

(30) Priority: 09.12.2015 CN 201510906202
(71) Applicant: Xiaomi Inc., Beijing 100085 (CN)
(72) Inventor: WU, Nan, Haidian District, Beijing 100085 (CN); GAO, Yingjun, Haidian District, Beijing 100085 (CN); LIU, Chenxi, Haidian District, Beijing 100085 (CN)
(74) Representative: Loustalan, Paul William

(57) **Abstract**

The present disclosure relates to a method and a device for arranging applications. The method includes: acquiring (S101) an arrangement manner of at least one application App on a screen of a television; receiving (S102) an App arrangement adjusting instruction input by a user; adjusting (S103) the arrangement manner based on the App arrangement adjusting instruction and generating an adjusted arrangement manner; and sending (S104) the adjusted arrangement manner to the television.

## Description

### TECHNICAL FIELD

The present disclosure generally relates to the field of communication technology, and more particularly, to a method and a device for arranging applications.

### BACKGROUND

Smart televisions or smart set-top boxes have drawn more and more user's attention. Like computers and smartphones, various Applications (App) may be installed in the smart televisions or smart set-top boxes.

In the related art, the Apps are arranged in a time sequence that they are installed in the smart televisions or smart set-top boxes, when displayed on the screen of the televisions or the smart set-top boxes. A user needs to rummage a desired App by a remote control. If the user would like to adjust a location of an App, he/she may only adjust it step by step by the remote control.

### SUMMARY

Accordingly, the present disclosure provides a method and a device for arranging applications, in accordance with claims which follow.

In order to overcome problems in the related art, the present disclosure provides a method and a device for arranging applications.

According to a first aspect, the present disclosure relates to a method for arranging applications, at a terminal including:
acquiring an arrangement manner of at least one application App on a screen of a television;
receiving an App arrangement adjusting instruction input by a user;
adjusting the arrangement manner based on the App arrangement adjusting instruction and generating an adjusted arrangement manner; and
sending the adjusted arrangement manner to the television.

According to a second aspect, the present disclosure relates to a device for arranging applications, the device being used in a terminal, including:
an acquiring module configured to acquire an arrangement manner of at least one application App on a screen of a television;
a receiving module configured to receive an App arrangement adjusting instruction input by a user;
an adjusting module configured to adjust the arrangement manner based on the App arrangement adjusting instruction and generating an adjusted arrangement manner; and
a sending module configured to send the adjusted arrangement manner to the television.

According to a third aspect, the present disclosure relates to a device for arranging applications, including:
a processor; and
a memory for storing instructions executable by the processor,
wherein the processor is configured to perform:
acquiring an arrangement manner of at least one application App on a screen of a television;
receiving an App arrangement adjusting instruction input by a user;
adjusting the arrangement manner based on the App arrangement adjusting instruction and generating an adjusted arrangement manner; and
sending the adjusted arrangement manner to the television.

In one particular embodiment, the steps of the method for arranging applications are determined by computer program instructions.

Consequently, according to a fourth aspect, the present disclosure is also directed to a computer program for executing the steps of a method for arranging applications as described above when this program is executed by a computer.

This program can use any programming language and take the form of source code, object code or a code intermediate between source code and object code, such as a partially compiled form, or any other desirable form.

The present disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical scheme according to embodiments of the present disclosure may have the following beneficial effects: the terminal acquires an arrangement manner of at least one application App on a screen of a television; receives an App arrangement adjusting instruction input by a user; adjusts the arrangement manner and generates an adjusted arrangement manner; and sends the adjusted arrangement manner to the television. It achieves that the user may adjust the arrangement manner of at least one application App, which is on the screen of the television, on a terminal, thereby facilitating user operation, increasing adjustment efficiency and also improving user experience.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for arranging applications according to an exemplary embodiment;
Fig. 2 is a schematic diagram showing an arrangement interface in a method for arranging applications according to an exemplary embodiment;
Fig. 3 is a schematic diagram showing an arrangement interface in a method for arranging applications according to another exemplary embodiment;
Fig. 4 is a block diagram showing a first embodiment of a device for arranging applications according to an exemplary embodiment;
Fig. 5 is a block diagram showing an entity of a terminal according to an exemplary embodiment; and
Fig. 6 is a block diagram showing a terminal according to an exemplary embodiment.

With the above accompanying drawings, specific embodiments of the present disclosure have been shown, for which a more detailed description will be given hereinafter. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

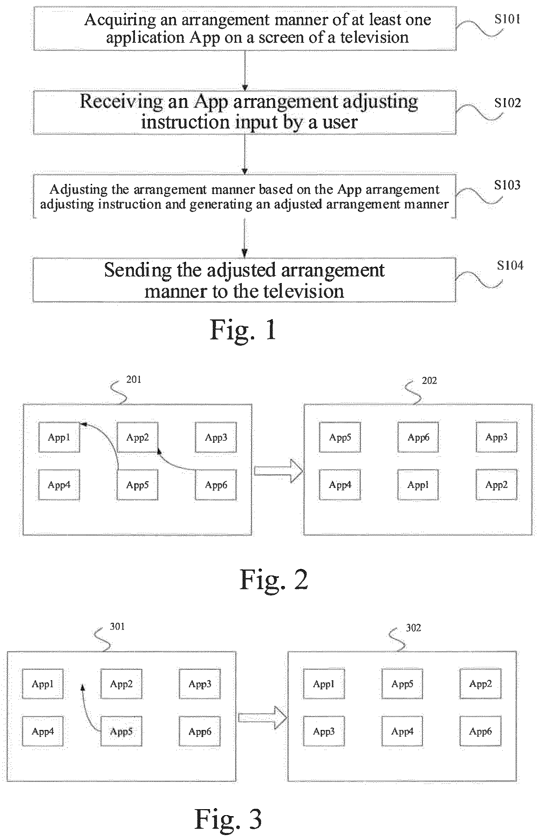

Fig. 1 is a flow chart showing a method for arranging applications according to an exemplary embodiment. As shown in Fig. 1, the method for arranging applications is applicable in an App arrangement device. The device may be integrated in a smart terminal, such as a cellphone, a tablet PC, a notebook, or the like. The method includes following steps.

In step S101, an arrangement manner of at least one App on a screen of a television is acquired.

For example, the terminal acquires an arrangement manner of at least one App on a smart television. Then the user may view and control, the arrangement manner of the App on the smart television, on the terminal.

In step S102, an App arrangement adjusting instruction input by a user is received.

In step S103, the arrangement manner is adjusted based on the App arrangement adjusting instruction and an adjusted arrangement manner is generated.

The user may directly input adjustment operation on the terminal. The user adjusts an original arrangement manner of the App on the screen of the television by different instructions. For example, the user may re-number each App on the terminal, or directly exchange sequences of the Apps, or stick a certain App to be in the first. Obviously, the present disclosure is not limited to these adjustment operations. Further, the terminal generates an adjusted arrangement manner based on adjustment operation of the user.

In step S104, the adjusted arrangement manner is sent to the television.

The terminal sends the adjusted arrangement manner to the television in an instruction recognizable for the television. The television will display a new arrangement of the App on the screen of the television based on the adjusted arrangement manner, after receiving the adjusted arrangement manner.

The above television may be a smart television or a smart set-top box.

In the present embodiment, the terminal acquires an arrangement manner of at least one application App on a screen of a television; receives an App arrangement adjusting instruction input by a user; adjusts the arrangement manner and generates an adjusted arrangement manner; and sends the adjusted arrangement manner to the television. It achieves that the user may adjust the arrangement manner of at least one application App, which is on the screen of the television, on a terminal, thereby facilitating user operation, increasing adjustment efficiency and also improving user experience.

On basis of the above embodiment, the step S101 may include: synchronizing information with the television, and acquiring the arrangement manner of the above-mentioned App on the screen of the television.

Optionally, the terminal and the television may perform information synchronization by accessing the same local area network, for example, by accessing the same Wireless-Fidelity (Wi-Fi) signal of a router. Alternatively, the terminal and the television may perform information synchronization by Bluetooth. Alternatively, the information synchronization may be performed according to the same account. For example, the user registers an account of the smart television, and then the information synchronization may be performed by logging the same account in an App, which is corresponding to the smart television, on the terminal. The specific synchronization manner is not limited herein.

Prior to the step S102, the terminal may display the acquired arrangement manner of the App on the screen of the television to the user. That is, the arrangement manner of the App on the screen of the television may be displayed on the display screen of the terminal.

The step S102 may include: receiving a dragging instruction to the at least one App input by touching a touch screen by the user. In the embodiment, the touch screen is the display screen of the terminal.

Correspondingly, adjusting the arrangement manner based on the above App arrangement adjusting instruction may include adjusting the arrangement manner based on the dragging instruction.

The user drags the App on the display screen to change the location of the App on the touch screen, thus changing the arrangement sequence of the App.

In the embodiment, the dragging instruction to the App may include: dragging the at least one App from a current location to a target location, which is not limited to this. There may be various dragging manners, for example, an inserting manner which directly inserts an App to be adjusted before a certain App, or an exchange dragging which drags one App to be adjusted to a current location of another App to trigger the two Apps to exchange their locations, or the like.

Fig. 2 is a schematic diagram showing an arrangement interface in a method for arranging applications according to an exemplary embodiment. As shown in Fig. 2, the exchange dragging is employed. The left block 201 is an arrangement manner of Apps on the screen of the television before adjustment operation. The user touches an App5 on the touch screen and drags the App5 all through to move the App5 to a location corresponding to the original location of an App1, thus triggering the App1 and App5 to exchange sequences. Then the user further touches an App6 on the touch screen again and drags the App6 all through to move the App6 to a location corresponding to the original position of an App2, thus triggering the App2 and App6 to exchange sequences. Then, the terminal generates an adjusted arrangement manner based on operations of the user, as shown in the right block 202.

Fig. 3 is a schematic diagram showing an arrangement interface in a method for arranging applications according to another exemplary embodiment. As shown in Fig. 3, the insert dragging is employed. The left block 301 is an arrangement manner of Apps on the screen of the television before adjustment. The user touches an App5 on the screen and drags the App5 all through to move the App5 to a location before an original location of an App2, thus inserting the App5 between the App1 and App2. In this way, the App5 moves to a location corresponding to the original location of the App2, and the App2 and Apps after the App2 are moved rearward by one sequence number successively. Then, the terminal generates an adjusted arrangement manner based on the operation of the user, as shown in the right block 302.

In the present embodiment, the terminal acquires an arrangement manner of at least one application App on a screen of a television; receives an App arrangement adjusting instruction input by a user; adjusts the arrangement manner and generates an adjusted arrangement manner; and sends the adjusted arrangement manner to the television. In the embodiment, the user may directly changes a location of an App on the terminal by a dragging manner, which is convenient and easy to implement, thereby eliminating the necessity of adjusting the arrangement of Apps step by step by the remote control. It achieves that the user may adjust the arrangement manner of at least one application App, which is on the screen of the television, on a terminal, thereby facilitating user operation, increasing adjustment efficiency and also improving user experience.

Optionally, the adjusted arrangement manner includes: one or more identification of the at least one App and corresponding adjusted arrangement sequence number. That is, the terminal modifies the arrangement sequence number of one or more adjusted App based on adjustments of the user. As shown in Fig. 2, the arrangement sequence number of the App5 is changed from 5 to 1. Thus, a sorting document is generated, which includes an identification of each App and corresponding adjusted arrangement sequence numbers. The sorting document is sent to the television. Then the television may know a new arrangement sequence number of each App, and arrange each App based on the new arrangement sequence number. Therefore, the at least one App is displayed on the screen based on the new arrangement manner.

The following is embodiments of devices according to the present disclosure, which may be configured to perform the embodiments of methods of the present disclosure. Details not disclosed in the embodiments of devices may be referred to the embodiments of methods.

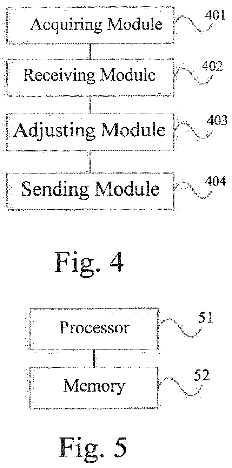

Fig. 4 is a block diagram showing a first embodiment of a device for arranging applications according to an exemplary embodiment. The device for arranging applications may be implemented by software, hardware or a combination of the both into a part of or whole of an electronic apparatus including a touch display screen. As shown in Fig. 4, the device includes an acquiring module 401, a receiving module 402, an adjusting module 403 and a sending module 404.

The acquiring module 401 is configured to acquire an arrangement manner of at least one application App on a screen of a television.

The receiving module 402 is configured to receive an App arrangement adjusting instruction input by a user.

The adjusting module 403 is configured to adjust the arrangement manner based on the App arrangement adjusting instruction and generating an adjusted arrangement manner.

The sending module 404 is configured to send the adjusted arrangement manner to the television.

In the present embodiment, the device for arranging applications acquires an arrangement manner of at least one application App on a screen of a television; receives an App arrangement adjusting instruction input by a user; adjusts the arrangement manner and generates an adjusted arrangement manner; and sends the adjusted arrangement manner to the television. It achieves that the user may adjust the arrangement manner of at least one application App, which is on the television screen, on a terminal, thereby facilitating user operation, increasing adjustment efficiency and also improving user experience.

Optionally, the acquiring module 401 may be configured to, for example, acquire, by synchronizing information with the television, the arrangement manner of the at least one application App on the screen of the television.

Optionally, the receiving module 402 is configured to, for example, receive a dragging instruction to the at least one App input by touching a touch screen by the user.

On basis of the above embodiments, the dragging instruction to the at least one App may include: dragging the at least one App from a current location to a target location.

Optionally, the adjusted arrangement manner includes: one or more identification of the at least one App and corresponding adjusted arrangement sequence number.

The above describes an internal function module and structure schematic of the device for arranging applications, whose substantial executive entity should be a terminal. Fig. 5 is a block diagram showing an entity of a terminal according to an exemplary embodiment. Referring to Fig. 5, the terminal may include a processor 51 and a memory 52.

The memory 52 is configured to store instructions executable by the processor 51.

The processor 51 is configured to perform the steps that follow.

Acquire an arrangement manner of at least one application App on a screen of a television.

Receive an App arrangement adjusting instruction input by a user.

Adjust the arrangement manner based on the App arrangement adjusting instruction and generating an adjusted arrangement manner.

Send the adjusted arrangement manner to the television.

In the above-described embodiment of a terminal, it should be understood that the processor may be a central processing unit (CPU), or may also be other general purpose processor, a digital signal processor (DSP), an application specific integrated circuits (ASIC) and the like. The general purpose processor may be a microprocessor or may also be any conventional processor, or the like. The aforementioned memory may be a read-only memory (ROM), a random access memory (RAM), a flash memory, a hard disk or a solid state drive. A SIM card, also known as a user identification card, a smart card, a digital mobile phone must be installed with this card in order to be used. That is, a computer chip is stored with information of a digital mobile phone customer, an encrypted encryption key and a phone book of a user and so on. Steps of the method combining with embodiments of the present disclosure may be directly employed by executing and accomplishing by a hardware processor, or be executed and accomplished by a combination of a hardware module and a software module in the processor.

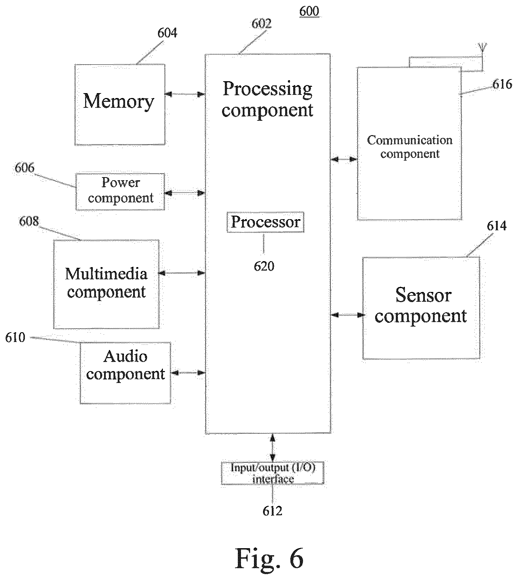

Fig. 6 is a block diagram showing a terminal 600 according to an exemplary embodiment. For example, the above device for arranging applications may be a terminal which may achieve instant messaging, such as a smartphone, a computer, a tablet PC, and the like. Referring to Fig. 6, the terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, data communications, multimedia operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operations of the terminal 600. Examples of such data include instructions for any applications or methods operated on the terminal 600, various data, messages, pictures, video, etc. The memory 604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power sources, and any other components associated with the generation, management, and distribution of power in the terminal 600.

The multimedia component 608 includes a screen providing an output interface between the terminal 600 and the user. In embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 610 is configured to output and/or input audio signals. For example, the audio component 610 includes a microphone ("MIC") configured to receive an external audio signal when the terminal 600 is in an operation mode, such as a call mode, a recording mode, and a voice recognition mode. The received audio signal may be further stored in the memory 604 or transmitted via the communication component 616. In embodiments, the audio component 610 further includes a speaker to output audio signals.

The I/O interface 612 provides an interface between the processing component 602 and peripheral interface modules, such as a keyboard, a click wheel, buttons, and the like.

The sensor component 614 includes one or more sensors to provide state assessments of various aspects of the terminal 600. For instance, the sensor component 614 may detect an open/closed state of the terminal 600, relative positioning of components, e.g., the display and the keypad, of the terminal 600, a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may further include a light sensor, such as a CMOS or CCD image sensor, for use in imaging applications. In embodiments, the sensor component 614 may further include an accelerometer sensor, a gyroscope sensor, a magnetic sensor, a pressure sensor or a temperature sensor.

The communication component 616 is configured to facilitate communication, wired or wirelessly, between the terminal 600 and other devices. The terminal 600 may access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary embodiments, there is further provided a non-transitory computer-readable storage medium including instructions, such as included in the memory 604, executable by the processor 620 in the terminal 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processing component of a device for arranging applications, the device for arranging applications is enabled to perform a method for arranging applications, including the steps that follow.

Acquire an arrangement manner of at least one application App on a screen of a television.

Receive an App arrangement adjusting instruction input by a user.

Adjust the arrangement manner based on the App arrangement adjusting instruction and generating an adjusted arrangement manner.

Send the adjusted arrangement manner to the television.

Further, the step of acquiring an arrangement manner of at least one application App on a screen of a television includes the following step.

Acquire, by synchronizing information with the television, the arrangement manner of the at least one application App on the screen of the television.

Further, the step of receiving an App arrangement adjusting instruction input by a user includes the following step.

Receive a dragging instruction to the at least one App input by touching a touch screen by the user.

Further, the dragging instruction to the at least one App includes: dragging the at least one App from a current location to a target location.

Further, the adjusted arrangement manner includes: one or more identification of the at least one App and corresponding adjusted arrangement sequence number.

## Claims

1. A method for arranging applications, **characterized in** comprising, at a terminal:
acquiring (S101) an arrangement manner of at least one application App on a screen of a television;
receiving (S102) an App arrangement adjusting instruction input by a user;
adjusting (S103) the arrangement manner based on the App arrangement adjusting instruction and generating an adjusted arrangement manner; and
sending (S104) the adjusted arrangement manner to the television.

2. The method of claim 1, wherein the acquiring (S101) an arrangement manner of at least one application App on a screen of a television comprises:
acquiring, by synchronizing information with the television, the arrangement manner of the at least one application App on the screen of the television.

3. The method of claim 1 or 2, wherein the receiving (S102) an App arrangement adjusting instruction input by a user comprises:
receiving a dragging instruction to the at least one App input by touching a touch screen by the user.

4. The method of claim 3, wherein the dragging instruction to the at least one App comprises: dragging the at least one App from a current location to a target location.

5. The method of any one of claims 1-4, wherein the adjusted arrangement manner comprises: one or more identification of the at least one App and corresponding adjusted arrangement sequence number.

6. A device for arranging applications, **characterized in** the device being used in a terminal and comprising:
an acquiring module (401) configured to acquire an arrangement manner of at least one application App on a screen of a television;
a receiving module (402) configured to receive an App arrangement adjusting instruction input by a user;
an adjusting module (403) configured to adjust the arrangement manner based on the App arrangement adjusting instruction and generating an adjusted arrangement manner; and
a sending module (404) configured to send the adjusted arrangement manner to the television.

7. The device of claim 6, wherein the acquiring module (401) is configured to acquire, by synchronizing information with the television, the arrangement manner of the at least one application App on the screen of the television.

8. The device of claim 6 or 7, wherein the receiving module (402) is configured to receive a dragging instruction to the at least one App input by touching a touch screen by the user.

9. The device of claim 8, wherein the dragging instruction to the at least one App comprises: dragging the at least one App from a current location to a target location.

10. The device of any one of claims 6-9, wherein the adjusted arrangement manner comprises: one or more identification of the at least one App and corresponding adjusted arrangement sequence number.

11. A computer program, which when executing on a processor, performs a method according to any one of claims 1 to 5.
